# EUROPÄISCHE PATENTSCHRIFT

(11) **EP 1 430 657 B1**
(45) Veröffentlichungstag und Bekanntmachung des Hinweises auf die Patenterteilung: **30.03.2005**
(21) Anmeldenummer: 02774352.5
(22) Anmeldetag: 13.09.2002
(51) Int. Cl.: H04L 12/46

(54) **VERFAHREN ZUR ERSTELLUNG EINER DYNAMISCHEN ADRESSTABELLE FÜR EINEN KOPPELKNOTEN IN EINEM DATENNETZ UND VERFAHREN ZUR ÜBERTRAGUNG EINES DATENTELEGRAMMS**
METHOD FOR CREATING A DYNAMIC ADDRESS TABLE FOR A SWITCHING NODE IN A DATA NETWORK AND A METHOD FOR TRANSMITTING A DATA MESSAGE
PROCEDE POUR LA CREATION D'UNE TABLE D'ADRESSES DYNAMIQUE POUR UN NOEUD DE COUPLAGE DANS UN RESEAU DE DONNEES ET PROCEDE POUR LA TRANSMISSION D'UN TELEGRAMME DE DONNEES

(30) Priorität: 26.09.2001 DE 10147419
(43) Veröffentlichungstag der Anmeldung: 23.06.2004
(73) Patentinhaber: SIEMENS AKTIENGESELLSCHAFT, 80333 München (DE)
(72) Erfinder: BRÜCKNER, Dieter, 96199 Zapfendorf (DE); GÖTZ, Franz-Josef, 91180 Heideck (DE); KLOTZ, Dieter, 90768 Fürth (DE); SCHIMMER, Jürgen, 90473 Nürnberg (DE)
(86) Internationale Anmeldenummer: PCT/DE2002/003431
(87) Internationale Veröffentlichungsnummer: WO 2003/028308

(56) Entgegenhaltungen:
- EP-A- 0 993 156
- WO-A-00/11888
- US-A- 5 768 531
- US-A- 6 101 188

## Beschreibung

Verfahren zur Erstellung einer dynamischen Adresstabelle für einen Koppelknoten in einem Datennetz und Verfahren zur Übertragung eines Datentelegramms

Die Erfindung betrifft ein Verfahren zur Erstellung einer dynamischen Adresstabelle für einen Koppelknoten in einem Datennetz, insbesondere in einem Automatisierungssystem, sowie ein Verfahren zur Übertragung eines Datentelegramms über einen Koppelknoten eines solchen Datennetzes sowie einen entsprechenden Koppelknoten, ein entsprechendes Datennetz und Computerprogramm.

Aus dem Stand der Technik sind verschiedene Typen von Datennetzen bekannt, bei denen die Datennetzkomponenten eine Entscheidung treffen, über welchen Port der betreffenden Datennetzkomponente ein Datentelegramm zu senden ist. Insbesondere sind auch so genannte schaltbare Datennetze bekannt, bei denen eine Verbindung in dem Datennetz zwischen zwei Teilnehmern mittels einer oder mehrerer Punkt-zu-Punkt Verbindungen gebildet wird.

Ebenfalls ist es aus dem Stand der Technik an sich bekannt, dass die Entscheidung, über welchen Port einer Datennetzkomponente ein zuvor empfangenes Datentelegramm zu senden ist, mit Hilfe einer Adresstabelle erfolgt. Jeder Eintrag in der Adresstabelle speichert z. B. die Stationsadresse einer Ziel-Datennetz-Komponente (eine so genannte Unicast-Adresse), oder eine Multicast-Adresse, oder eine Netzwerkadresse sowie die Nummern der Ports der betreffenden Datennetzwerkkomponente, über die ein empfangenes Datentelegramm zur Weiterleitung an dessen Zieladresse zu senden ist.

Ferner ist aus dem Stand der Technik die Verwendung von dynamisch veränderbaren und statischen Adresstabellen bekannt. Dynamische Adresstabellen haben dynamisch veränderbare Tabelleneinträge, die von der Hardware der betreffenden Datennetzkomponente selbständig ohne Softwareunterstützung verwaltet werden. Dagegen werden die statischen Einträge in einer statischen Adresstabelle von der Anwendungssoftware jeder Datennetzkomponente verwaltet und dürfen von der Hardware einer Datennetzkomponente nicht verändert werden.

Eine aus dem Stand der Technik bekannte Möglichkeit zu erkennen, ob eine Adresse, z. B. eine Multicast-Adresse, und die der Multicast-Adresse zugeordneten Informationen in einer Adresstabelle gespeichert sind, ist der direkte Vergleich der Zieladresse des betreffenden Datentelegramms mit allen in der Adresstabelle gespeicherten Adressen. Dieses Verfahren ist zeitaufwendig oder setzt einen inhaltsadressierbaren Speicher voraus.

Ein Verfahren, das es erlaubt, Adresseinträge, die zunächst auf dieselbe Einsprungadresse der Adresstabelle abgebildet werden, gleichzeitig in einer Adresstabelle zu speichern, ist in US-A-5923660 beschrieben. In einem Ethernet-Kontroller ist dazu eine hash-Adresstabelle mit einer entsprechenden Steuerung vorgesehen, die den hash-Wert der Adresse eines Datenpakets bildet, um einen initialen Wert für einen Einsprung in die hash-Adresstabelle zu finden. Dieser initiale Wert wird erforderlichenfalls um einen festen Sprung-Wert geändert, wenn die Adresse, die in der durch den initialen Wert lokalisierten Zeile der hash-Adresstabelle nicht mit der empfangenen Zieladresse übereinstimmt.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen.

Der Begriff Übertragung von Daten wird hier synonym zur oben erwähnten Übertragung von Datentelegrammen oder Datenpaketen verwendet. Die Vernetzung selbst wird beispielsweise bei schaltbaren Hochleistungsdatennetzen, insbesondere Ethernet, dadurch gelöst, dass zwischen zwei Teilnehmern jeweils mindestens eine Koppeleinheit geschaltet ist, die mit beiden Teilnehmern verbunden ist. Jede Koppeleinheit kann mit mehr als zwei Teilnehmern verbunden sein.

Jeder Teilnehmer ist mit mindestens einer Koppeleinheit, aber nicht direkt mit einem anderen Teilnehmer verbunden. Teilnehmer sind beispielsweise Computer, speicherprogrammierbare Steuerungen (SPS) oder andere Maschinen, die elektronische Daten mit anderen Maschinen austauschen, insbesondere verarbeiten. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt-zu-Punkt Verbindungen, d.h. ein Teilnehmer kann alle anderen Teilnehmer des schaltbaren Datennetzes nur indirekt, durch entsprechende Weiterleitung der zu übertragenden Daten mittels einer oder mehrerer Koppeleinheiten erreichen.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Aus dem Stand der Technik sind verschiedene standardisierte Kommunikationssysteme, auch Bussysteme genannt, zum Datenaustausch zwischen zwei oder mehreren elektronischen Baugruppen bzw. Geräten bekannt, insbesondere auch für den Einsatz in Automatisierungssystemen. Beispiele für solche Kommunikationssysteme sind: Feldbus, Profibus, Ethernet, Industrial Ethernet, FireWire oder auch PC-interne Bussysteme (PCI). Diese Bussysteme sind jeweils für unterschiedliche Anwendungsfelder konzipiert bzw. optimiert und erlauben den Aufbau eines dezentralen Steuerungssystems. Für die Prozesssteuerung und -überwachung in der automatisierten Fertigung und insbesondere bei digitalen Antriebstechniken sind sehr schnelle und zuverlässige Kommunikationssysteme mit vorhersagbaren Reaktionszeiten erforderlich.

Mit parallelen Bussystemen, wie beispielsweise SMP, ISA, PCI oder VME, ist eine sehr schnelle und einfache Kommunikation zwischen verschiedenen Baugruppen aufbaubar. Diese bekannten Bussysteme finden ihren Einsatz dabei insbesondere in Rechnern und PCs.

Insbesondere aus der Automatisierungstechnik sind synchrone, getaktete Kommunikationssysteme mit Äquidistanz-Eigenschaften bekannt. Hierunter versteht man ein System aus wenigstens zwei Teilnehmern, die über ein Datennetz zum Zweck des gegenseitigen Austauschs von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein- / Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im Folgenden Regler- oder Steuerungseinheiten jeglicher Art verstanden.

Ein äquidistanter, deterministischer, zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Taktschläger) zu den anderen Komponenten übertragen. Bei isochronem Realtime-Ethernet wird der Takt bzw. die Zeitbasis von einem Synchronisationsmaster durch das Senden von Synchronisationstelegrammen vorgegeben.

In der deutschen Patentanmeldung DE 100 58 524.8 ist ein System und ein Verfahren zur Übertragung von Daten über schaltbare Datennetze, insbesondere das Ethernet, offenbart, das einen Mischbetrieb von echtzeitkritischer und nichtechtzeitkritischer, insbesondere Inter- bzw. Intranet-basierter Datenkommunikation erlaubt.

Aus dem Stand der Technik ist es ferner bekannt, dass die Komponenten eines schaltbaren Datennetzes die Entscheidung, über welchen Port eines Koppelknotens ein Datentelegramm zu senden ist, mit Hilfe von dynamischen Adresstabellen treffen. Eine dynamische Adresstabelle speichert jeweils Stationsadressen von Netzwerk-Komponenten und die Angabe des Ports über den ein Datentelegramm an diesen Netzwerkteilnehmer zu senden ist. Da sich die Netzwerkkonfiguration (z.B. durch Aktivierung / Deaktivierung bzw. Ausfall oder Umverdrahtung) dynamisch ändern kann, und da aufgrund der begrenzten Speicherkapazität nicht alle Stationsadressen gleichzeitig in einer Adresstabelle gespeichert werden können, sind die von der Netzwerk-Komponente, das heißt, z. B. von dem Koppelknoten, verwalteten Tabelleneinträge dynamisch änderbar.

Da Komponenten eines Datennetzes z. B. ausfallen oder umverdrahtet werden können, muss ein Alterungsmechanismus vorgesehen sein, der einen Adresseintrag für ungültig erklären kann, wenn eine bestimmte Bedingung des gewählten Alterungsverfahrens erfüllt ist.

Aus der EP-A-0 993 156 ist ein entsprechendes Alterungsverfahren bekannt, bei dem innerhalb eines parametrierbaren zeitintervalls ein Datentelegramm von der betreffenden Netzwerkkomponente mit der in der Adresstabelle eingetragenen Stationsadresse empfangen werden muss, um als gültig gekennzeichnet zu bleiben.

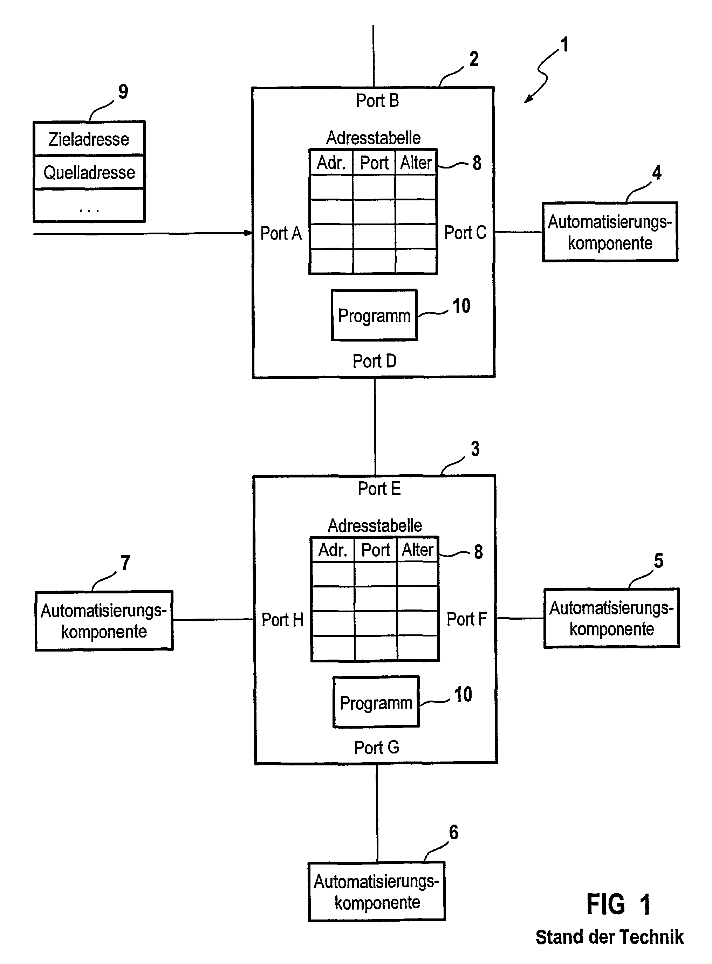

Ein entsprechendes aus dem Stand der Technik bekanntes Datennetz zeigt die Figur 1. Das Datennetz 1 beinhaltet einen Koppelknoten 2 mit den Ports A, B, C und D sowie einen Koppelknoten 3 mit den Ports E, F, G und H. Der Port C des Koppelknotens 2 ist mit einer Automatisierungskomponente 4 verbunden und der Port B mit einem weiteren Koppelknoten, der in der Figur 1 der Übersichtlichkeit halber nicht gezeigt ist.

Ferner ist der Port D mit dem Port E des Koppelknotens 3 verbunden. Die Ports F, G bzw. H des Koppelknotens 3 sind mit den Automatisierungskomponenten 5, 6 bzw. 7 verbunden.

Jeder der Koppelknoten 2 und 3 beinhaltet eine Adresstabelle 8. Jede Zeile einer Adresstabelle 8 beinhaltet eine Stationsadresse einer der Komponenten des Datennetzes 1, das heißt, beispielsweise einer der Automatisierungskomponenten 4, 5, 6 oder 7. Ferner beinhaltet eine betreffende Zeile der Adresstabelle 8 des Koppelknotens eine Angabe des Ports dieses Koppelknotens, von dem ein von dem Koppelknoten empfangenes Datentelegramm mit der Stationsadresse als Zieladresse weiterzuleiten ist. Darüber hinaus beinhaltet eine solche Zeile der Adresstabelle 8 einen Eintrag hinsichtlich der Alterung des Eintrags in der betreffenden Zeile, das heißt, hinsichtlich der Gültigkeit dieses Eintrags.

Ein Eintrag in einer Zeile der Adresstabelle 8 wird dann generiert, wenn ein Datentelegramm 9 mit einer Quelladresse und einer Zieladresse empfangen wird, beispielsweise am Port A des Koppelknotens 2. Hierbei kann es sich beispielsweise um ein Ethernet-Datentelegramm handeln.

Die Tatsache, dass am Port A ein Datentelegramm mit der betreffenden Quelladresse empfangen worden ist, wird in der Adresstabelle 8 als Eintrag in einer Zeile der Adresstabelle festgehalten. Ein Alterungs-Bit in der betreffenden Zeile der Adresstabelle 8 wird z.B. auf 0 gesetzt, um die Aktualität dieses Eintrags anzuzeigen.

Jeder der Koppelknoten 2 und 3 hat eine Zeitbasis, die jeweils global für die Adresstabelle 8 gilt. Die Zeitbasis kann mit einem Zähler realisiert sein, der jeweils bis zu einem Schwellwert zählt.

Nachdem ein aktueller Eintrag in der Adresstabelle 8 erzeugt worden ist, und der Zähler zurückgesetzt wird, wird das Alterungs-Bit z.B. von 0 auf 1 gesetzt. Der Eintrag ist dann immer noch gültig. Wenn zu einem Zeitpunkt, zu dem das Alterungs-Bit auf 1 gesetzt ist, ein weiteres Datentelegramm 9 empfangen wird, wird das Alterungs-Bit wieder z.B. auf 0 zurückgesetzt. Ist dies nicht der Fall, so wird beim nächsten Zurücksetzen des Zählers das Alterungs-Bit z.B. auf 2 gesetzt, was anzeigt, dass der Eintrag ungültig ist.

Die Verwaltung der Adresstabellen 8 erfolgt dabei mittels eines Programms 10.

Nachteilig bei diesem Verfahren ist insbesondere, dass die Adresstabelle 8 periodisch vollständig ausgelesen werden muss, um zu überprüfen, ob ein Eintrag als ungültig zu kennzeichnen ist.

Der Erfindung liegt daher die Aufgabe zugrunde, ein verbessertes Verfahren zur Erstellung einer dynamischen Adresstabelle sowie ein verbessertes Verfahren zur Übertragung eines Datentelegramms und einen verbesserten Koppelknoten und ein entsprechendes Datennetz und Computerprogrammprodukt zu schaffen.

Die der Erfindung zugrunde liegende Aufgabe wird jeweils mit den Merkmalen der unabhängigen Patentansprüche gelöst. Bevorzugte Ausführungsformen der Erfindung sind in den abhängigen Ansprüchen angegeben.

Der erfindungsgemäße Alterungsmechanismus ist besonders vorteilhaft, da er mit Bezug auf den betreffenden Eintrag in der Adresstabelle ereignisgesteuert ist. Im Vergleich zu dem aus dem Stand der Technik bekannten zeitbasierten Alterungsmechanismus ist dies besonders vorteilhaft, da die Adresstabelle nicht periodisch vollständig ausgelesen werden muss, um zu überprüfen, ob ein Eintrag als ungültig zu kennzeichnen ist.

Nach einer bevorzugten Ausführungsform der Erfindung wird ein Eintrag in der Adresstabelle für ungültig erklärt, wenn seit dem zuletzt empfangenen Datentelegramm von dem Netzwerkteilnehmer, dessen Stationsadresse in der Adresstabelle eingetragen ist, die Anzahl gesendeter Datentelegramme an diesen Netzwerkteilnehmer größer ist als ein parametrierter Wert.

Nach einer weiteren bevorzugten Ausführungsform der Erfindung wird die gezählte Anzahl gesendeter Datentelegramme an diesen Netzwerkteilnehmer zurückgesetzt, wenn erneut ein Datentelegramm von diesem Netzwerkteilnehmer empfangen wird.

Nach einer weiteren bevorzugten Ausführungsform der Erfindung erfolgt die Aktualisierung und Überprüfung eines Tabelleneintrags auf dessen Gültigkeit ereignisgesteuert, das heißt, bei jedem Sendevorgang, wenn die Netzwerkkomponente mit Hilfe der Adresstabelle entscheidet, über welchen Port ein Datentelegramm zu senden ist, und die Stationsadresse der Netzwerkkomponente, für die das Datentelegramm bestimmt ist, in der Adresstabelle eingetragen ist. Dies reduziert im Vergleich zum zeitgesteuerten Alterungsverfahren erheblich die Speicherzugriffe auf die Adresstabelle.

Im Weiteren wird ein bevorzugtes Ausführungsbeispiel der Erfindung mit Bezugnahme auf die Zeichnungen näher erläutert. Es zeigen
- Figur 1: einen Ausschnitt aus einem Datennetz gemäß Stand der Technik,
- Figur 2: einen Ausschnitt aus einer Ausführungsform eines erfindungsgemäßen Datennetzes,
- Figur 3: ein Flussdiagramm einer Ausführungsform eines erfindungsgemäßen Verfahrens.

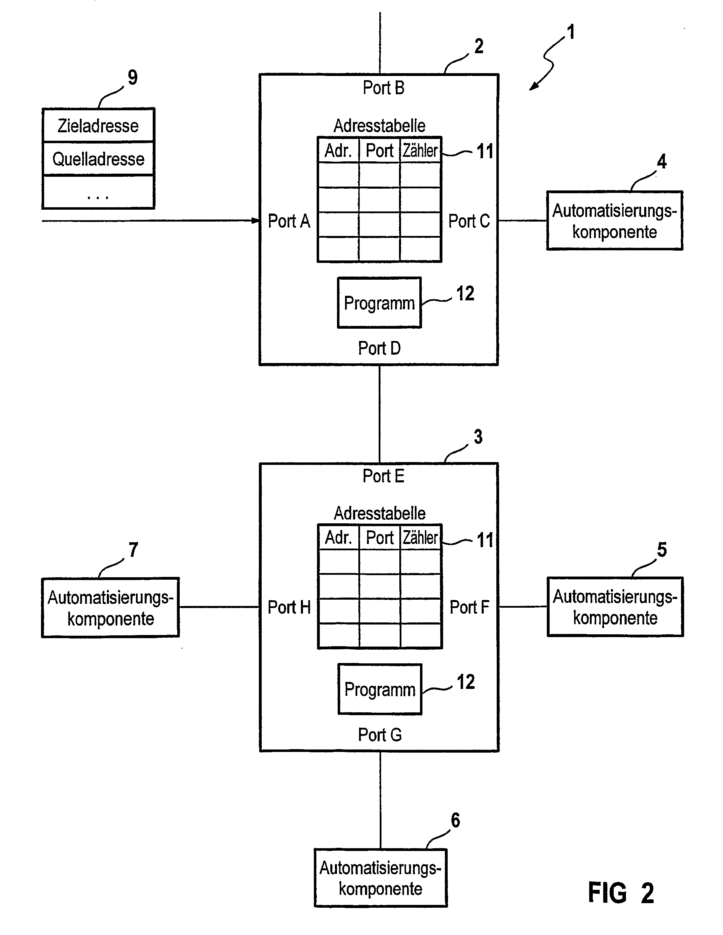

In der Figur 2 sind Elemente, die Elementen der Figur 1 entsprechen, mit denselben Bezugszeichen gekennzeichnet.

Die Koppelknoten 2 und 3 haben jeweils eine erfindungsgemäße Adresstabelle 11 sowie eine Komponente 12 zur Verwaltung der Adresstabelle 11. Diese Tabellenverwaltungs-Komponente 12 kann in Software und Hardware realisiert sein.

Wenn beispielsweise der Koppelknoten 2 an seinem Port A ein Datentelegramm 9 empfängt, so wird hierauf basierend ein Eintrag in der Adresstabelle 11 erzeugt. Dieser Eintrag in der Adresstabelle 11 beinhaltet die Quelladresse des Datentelegramms 9 sowie den Empfangsport, das heißt, in dem betrachteten Beispiel die Eingabe des Ports A.

Ferner beinhaltet der betreffende Eintrag einen Zählerinitialwert. Dieser ist für das Datennetz 1 oder für einzelne Koppelknoten parametrierbar und kann z. B. als 128 gewählt werden.

Wird nun vom Koppelknoten 2 beispielsweise von der Automatisierungskomponente 4 am Port C ein weiteres Datentelegramm empfangen, welches als Zieladresse die Quelladresse des Datentelegramms 9 aufweist, so wird auf den entsprechenden Eintrag in der Adresstabelle 11 zugegriffen.

Es wird dann zunächst vom Programm 12 geprüft, ob der aktuelle Zählerwert des betreffenden Eintrags größer als 0 ist. Wenn dies der Fall ist, wird der Eintrag als gültig betrachtet und das von der Automatisierungskomponente 4 empfangene Datentelegramm über den in dem Eintrag angegebenen Port des Koppelknotens 2, das heißt, über den Port A, weitergeleitet. Darüber hinaus wird aufgrund des Empfangs eines an die Quelladresse gerichteten Datentelegramms im Koppelknoten 2 der aktuelle Zählerwert von der Tabellenverwaltungs-Komponente 12 dekrementiert.

Dieser Vorgang kann sich beispielsweise so lange wiederholen, bis der aktuelle Zählerwert den Wert 0 erreicht hat. Dann ist aufgrund des Werts 0 der betreffende Eintrag als ungültig gekennzeichnet. Der Zählerinitialwert entspricht also einer maximalen Anzahl von an die Quelladresse gerichteten Datentelegramme, die vom Koppelknoten 2 empfangen werden, bevor der betreffende Eintrag als ungültig betrachtet wird.

Anstelle der Dekrementierung des Zählerinitialwerts ist es auch möglich, einen Schwellwert vorzugeben, der der maximalen Anzahl von Datentelegrammen, die an die Quelladresse gerichtet sind, entsprechen, wobei der aktuelle Zählerwert dann bei jedem Empfang eines solchen Datentelegramms inkrementiert wird.

Von besonderem Vorteil ist dabei, dass die aktuellen Zählerwerte der einzelnen Zeilen in der Adresstabelle 11 nur ereignisgesteuert verändert werden. Beim Empfang eines Datentelegramms mit der Quelladresse des Datentelegramms als Zieladresse ist ein Zugriff auf den betreffenden Eintrag in der Adresstabelle 11 ohnehin erforderlich, um denjenigen Port zu ermitteln, über den das betreffende Datentelegramm weiterzuleiten ist. Anlässlich eines solchen Zugriffs wird gleichzeitig auf den aktuellen Zählerwert zugegriffen, um diesen zu überprüfen und gegebenenfalls zu dekrementieren bzw. zu inkrementieren.

Wird vom Koppelknoten 2 erneut das Datentelegramm 9 empfangen, so wird der aktuelle Zählerwert des betreffenden Eintrags in der Adresstabelle 11 auf den Zählerinitialwert zurückgesetzt.

Entsprechend verhält es sich für die Adresstabelle 11 des Koppelknotens 3 und dessen Programm 12 sowie für die weiteren in der Figur 2 nicht dargestellten Koppelknoten des Datennetzes 1.

Die Koppelknoten 2 und 3 können Einzelgeräte sein, oder sie können auch jeweils einen integralen Bestandteil einer Automatisierungskomponente bilden. Als Automatisierungskomponenten kommen prinzipiell alle Regelungs-, Steuerungs-, Antriebs- und sonstige Komponenten eines Automatisierungssystems in Frage.

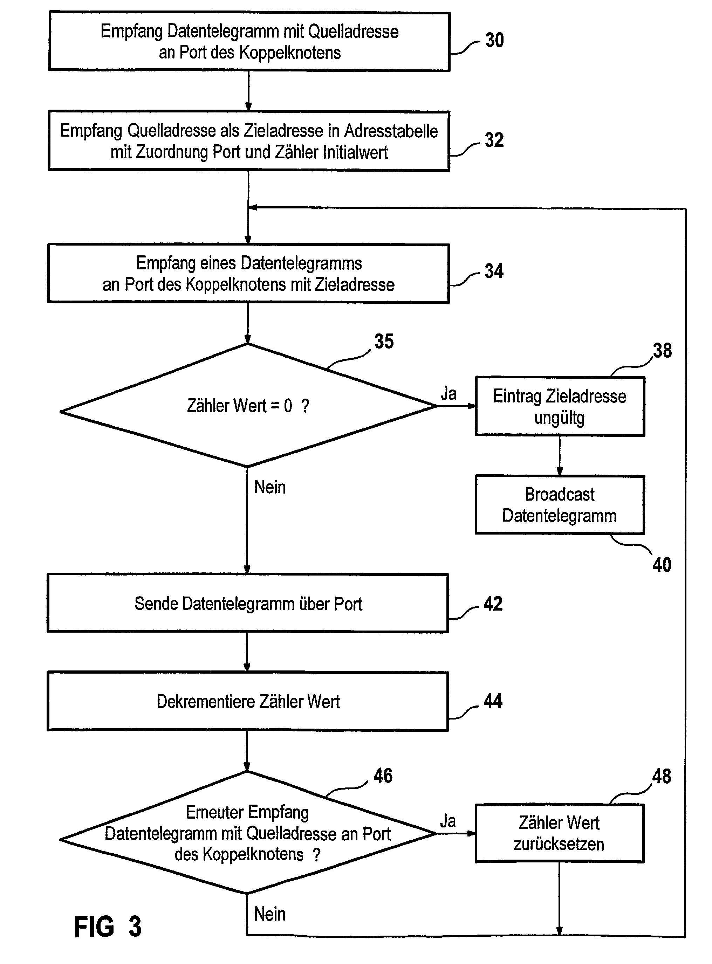

Die Figur 3 zeigt ein entsprechendes Flussdiagramm.

Im Schritt 30 wird an einem Port des hier betrachteten Koppelknotens des Datennetzes ein Datentelegramm empfangen. Dieses Datentelegramm beinhaltet eine Quelladresse, das heißt, die Stationsadresse des Teilnehmers des Datennetzes, welcher das Datentelegramm gesendet hat, sowie auch eine Zieladresse für das Datentelegramm, das heißt, die Stationsadresse desjenigen Teilnehmers des Datennetzes, der das Datentelegramm erhalten soll.
Im Schritt 32 wird die Quelladresse des im Schritt 30 von dem Koppelknoten empfangenen Datentelegramms in die Adresstabelle des Koppelknotens eingetragen. Im entsprechenden Eintrag der Adresstabelle hat diese Quelladresse die Funktion einer Zieladresse, das heißt, wenn vom Koppelknoten an einem anderen Port ein Datentelegramm mit der Quelladresse des Datentelegramms des Schritts 30 als Zieladresse empfangen wird, so wird auf den entsprechenden Eintrag in der Adresstabelle zugegriffen. Dieser Eintrag beinhaltet neben der Stationsadresse des Teilnehmers, der das Datentelegramm des Schritts 30 gesendet hat, den Port an dem das Datentelegramm des Schritts 30 von dem betrachteten Koppelknoten empfangen worden ist, sowie einen Zählerwert.

Bei der Erstellung des Eintrags in der Adresstabelle im Schritt 32 wird dem Zählerwert ein Zählerinitialwert zugeordnet.

Im Schritt 34 wird ein Datentelegramm an einem anderen Port des Koppelknotens mit einer Zieladresse empfangen. Die Zieladresse des Datentelegramms des Schritts 34 ist gleich der Quelladresse des Datentelegramms des Schritts 30.

Im Schritt 36 wird dann auf die Adresstabelle zugegriffen und der Eintrag in der Adresstabelle mit der Zieladresse des Datentelegramms des Schritts 34 gelesen. In diesem Eintrag wird dann geprüft, ob der aktuelle Zählerwert gleich 0 ist.

Ist der aktuelle Zählerwert gleich 0, so bedeutet dies, dass der betreffende Eintrag in der Adresstabelle nicht oder nicht mehr gültig ist. Diese Feststellung wird im Schritt 38 gemacht. Der Koppelknoten kann also nicht feststellen, über welchen seiner Ports das Datentelegramm weiterzuleiten ist, um an die gewünschte Zieladresse zu gelangen. Deshalb wird im Schritt 40 das Datentelegramm, welches im Schritt 34 empfangen worden ist, als Broadcast-Datentelegramm weitergeleitet, das heißt, das Datentelegramm wird über alle Ports des Koppelknotens mit Ausnahme des Ports, an dem das Datentelegramm im Schritt 34 empfangen worden ist, weitergeleitet.

Wenn die Prüfung im Schritt 36 ergibt, dass der aktuelle Zählerwert größer als 0 ist, so wird danach der Schritt 42 ausgeführt. Im Schritt 42 wird das Datentelegramm über den Port des Koppelknotens gesendet, welcher in dem betreffenden Eintrag der Adresstabelle angegeben ist. Im Schritt 44 wird sodann der aktuelle Zählerwert des betreffenden Eintrags dekrementiert.

Im Schritt 46 wird geprüft, ob erneut ein Datentelegramm an demselben Port und mit derselben Quelladresse wie im Schritt 30 von dem betrachteten Koppelknoten empfangen worden ist. Wenn dies der Fall ist, wird der Zählerwert des betreffenden Eintrags in der Adresstabelle auf den Zählerinitialwert im Schritt 48 zurückgesetzt. Danach geht die Ablaufsteuerung zurück zum Schritt 34.

Ergibt die Prüfung im Schritt 46, dass ein solcher Empfang nicht vorliegt, geht die Ablaufsteuerung unmittelbar zum Schritt 34.

## Patentansprüche

1. Verfahren zur Erstellung einer dynamischen Adresstabelle (11) für einen Koppelknoten (2, 3) in einem Datennetz (1) mit folgenden Schritten:
- Empfang eines ersten Datentelegramms (9) an einem Port des Koppelknotens (2, 3) mit einer Quelladresse,
- Eintrag der Quelladresse, einer Angabe des Ports und eines Zählerinitialwerts in einer der Quelladresse als Zieladresse zugeordneten Zeile der Adresstabelle (11), wobei der aktuelle Zählerwert die Gültigkeit des Eintrags angibt, **dadurch gekennzeichnet, dass** der aktuelle Zählerwert verändert wird, wenn ein zweites Datentelegramm mit der Quelladresse als Zieladresse empfangen wird und der Eintrag gültig ist.

2. Verfahren nach Anspruch 1, wobei der aktuelle Zählerwert auf den Zählerinitialwert zurückgesetzt wird, wenn ein drittes Datentelegramm an dem Port mit der Quelladresse empfangen wird.

3. Verfahren nach Anspruch 1 oder 2, wobei bei jedem Empfang des zweiten Datentelegramms der aktuelle Zählerwert inkrementiert wird, wenn das zweite Datentelegramm mit der Quelladresse als Zieladresse empfangen wird und der Eintrag gültig ist.

4. Verfahren nach Anspruch 1 oder 2, wobei bei jedem Empfang des zweiten Datentelegramms der aktuelle Zählerwert dekrementiert wird, wenn das zweite Datentelegramm mit der Quelladresse als Zieladresse empfangen wird und der Eintrag gültig ist.

5. Verfahren nach einem der vorhergehenden Ansprüche 1 bis 4, wobei es sich bei der Quell- und Zieladresse jeweils um eine Unicast-Adresse handelt.

6. Verfahren zur Übertragung eines Datentelegramms (9) mit einer Zieladresse über einen Koppelknoten (2, 3) eines Datennetzes (1) mit einer nach einem Verfahren nach einem der vorhergehenden Ansprüche 1 bis 5 erstellten Adresstabelle (11) mit folgenden Schritten:
- Empfang des Datentelegramms (9) durch den Koppelknoten (2, 3),
- Zugriff auf eine der Zieladresse des Datentelegramms (9) zugeordnete Zeile der Adresstabelle (11),
- Prüfung anhand des aktuellen Zählerwerts, ob der Eintrag in der Zeile gültig ist,
- Weiterleiten des Datentelegramms (9) an den in der Zeile angegebenen Port, wenn der Eintrag gültig ist.

7. Verfahren nach Anspruch 6, wobei das Datentelegramm (9) als Broadcast-Datentelegramm von dem Koppelknoten (2, 3) weitergeleitet wird, wenn der Eintrag nicht gültig ist.

8. Koppelknoten (2, 3) für ein Datennetz (11) mit Mitteln zur Erstellung einer dynamischen Adresstabelle (11) nach einem verfahren nach einem der vorhergehenden Ansprüche 1 bis 5.

9. Koppelknoten (2, 3) nach Anspruch 8 mit Mitteln zur Übertragung eines Datentelegramms (9) nach einem der vorhergehenden Ansprüche 6 oder 7.

10. Datennetz (1) mit einem Koppelknoten (2, 3) nach Anspruch 8 oder 9.

11. Computerprogrammprodukt zur Erstellung einer dynamischen Adresstabelle (11) nach einem Verfahren nach einem der vorhergehenden Ansprüche 1 bis 5.

12. Computerprogrammprodukt zur Übertragung eines Datentelegramms (9) nach einem der vorhergehenden Ansprüche 6 oder 7.

## Claims

1. A method for creating a dynamic address table (11) for a switching node (2, 3) in a data network (1), said method comprising the following steps:
- receipt of a first data message (9) with a source address at a port of the switching node (2, 3),
- entry of the source address, details of the port and a counter initial value in a line of the address table (11) that is assigned to the source address as the target address, whereby the current counter value indicates the validity of the entry,
**characterised in that** the current counter value is modified if a second data message with the source address as the target address is received and the entry is valid.

2. A method according to claim 1, wherein the current counter value is reset to the counter initial value if a third data message with the source address is received at the port.

3. A method according to claim 1 or claim 2, wherein the current counter value is incremented upon each receipt of the second data message if the second data message is received with the source address as the target address and the entry is valid.

4. A method according to claim 1 or claim 2, wherein the current counter value is decremented upon each receipt of the second data message if the second data message is received with the source address as the target address and the entry is valid.

5. A method according to any one of the preceding claims 1 to 4, wherein the source address and the target address are in each case unicast addresses.

6. A method for transmitting a data message (9) with a target address via a switching node (2, 3) of a data network (1) with an address table (11) created according to a method according to any one of preceding claims 1 to 5, said method comprising the following steps:
- receipt of the data message (9) by the switching node (2, 3),
- access to a line of the address table (11), which line has been assigned to the target address of the data message (9),
- checking by means of the current counter value whether the entry in the line is valid,
- forwarding of the data message (9) to the port specified in the line if the entry is valid.

7. A method according to claim 6, wherein the data message (9) is forwarded from the switching node (2, 3) as a broadcast data message if the entry is not valid.

8. A switching node (2, 3) for a data network (11) having means for creating a dynamic address table (11) according to a method according to any one of preceding claims 1 to 5.

9. A switching node (2, 3) according to claim 8 having means for transmitting a data message (9) according to any one of preceding claims 6 or 7.

10. A data network (1) having a switching node (2, 3) according to claim 8 or claim 9.

11. A computer programming product for creating a dynamic address table (11) according to a method according to any one of preceding claims 1 to 5.

12. A computer programming product for transmitting a data message (9) according to any one of preceding claims 6 or 7.

## Revendications

1. Procédé pour la création d'une table d'adresses (11) dynamique pour un noeud de connexion (2, 3) dans un réseau de données (1) avec les étapes suivantes :
- réception d'un premier télégramme de données (9) à un port du noeud de connexion (2, 3) avec une adresse d'origine,
- enregistrement de l'adresse d'origine, d'une indication du port et d'une valeur initiale de compteur dans une ligne, associée à l'adresse d'origine comme adresse de destination, de la table d'adresses (11), la valeur de compteur actuelle indiquant la validité de l'enregistrement,
**caractérisé par le fait qu'**on modifie la valeur de compteur actuelle lorsqu'un deuxième télégramme de données avec l'adresse d'origine comme adresse de destination est reçu et lorsque l'enregistrement est valide.

2. Procédé selon la revendication 1, dans lequel on remet la valeur de compteur actuelle à la valeur initiale de compteur lorsqu'un troisième télégramme de données est reçu sur le port avec l'adresse d'origine.

3. Procédé selon la revendication 1 ou 2 , d ans 1 equel, à c haque réception du deuxième télégramme de données, on incrémente la valeur de compteur actuelle lorsque le deuxième télégramme de données avec l'adresse d'origine comme adresse de destination est reçu et lorsque l'enregistrement est valide.

4. Procédé selon la revendication 1 ou 2, dans lequel, à chaque réception du deuxième télégramme de données, on incrémente la valeur de compteur actuelle lorsque le deuxième télégramme de données avec l'adresse d'origine comme adresse de destination est reçu et lorsque l'enregistrement est valide.

5. Procédé selon l'une des revendications précédentes 1 à 4, dans lequel l'adresse d'origine et l'adresse de destination sont à chaque fois une adresse monodestinataire.

6. Procédé pour la transmission d'un télégramme de données (9) avec une adresse de destination par l'intermédiaire d'un noeud de connexion (2 3) d'un réseau de données (1) avec une table d'adresses (11) créée selon un procédé selon l'une des revendications 1 à 5, avec les étapes suivantes :
- réception du télégramme de données (9) par le noeud de connexion (2,3),
- accès à une ligne, associée à l'adresse de destination du télégramme de données (9), de la table d'adresses (11),
- vérification à l'aide de la valeur de compteur actuelle pour savoir si l'enregistrement dans la ligne est valide,
- retransmission du télégramme de données (9) au port indiqué dans la ligne si l'enregistrement est valide.

7. Procédé selon la revendication 6, dans lequel le noeud de connexion (2, 3) retransmet le télégramme de données (9) comme télégramme de données à diffusion générale si l'enregistrement n'est pas valide.

8. Noeud de connexion (2, 3) pour un réseau de données (1 ) avec des moyens pour la création d'une table d'adresses (11) dynamique selon un procédé selon l'une des revendications précédentes 1 à 5.

9. Noeud de connexion (2, 3) selon la revendication 8 avec des moyens pour la transmission d'un télégramme de données (9) selon l'une des revendications précédentes 6 ou 7.

10. Réseau de données (1) avec un noeud de connexion (2, 3) selon la revendication 8 ou 9.

11. Programme informatique pour la création d'une table d'adresses (11) dynamique selon un procédé selon l'une des revendications précédentes 1 à 5.

12. Programme informatique pour la transmission d'un télégramme de données (9) selon l'une des revendications précédentes 6 ou 7.
